# EUROPÄISCHE PATENTSCHRIFT

(11) **EP 1 114 305 B1**
(45) Veröffentlichungstag und Bekanntmachung des Hinweises auf die Patenterteilung: **02.04.2014**
(21) Anmeldenummer: 00943935.7
(22) Anmeldetag: 29.06.2000
(51) Int. Cl.: G01M 15/04

(54) **VERFAHREN ZUM PRÜFEN EINES VERBRENNUNGSMOTORS AUF MONTAGE UND/ODER FERTIGUNGSFEHLER**
METHOD FOR TESTING A COMBUSTION ENGINE FOR ASSEMBLY AND/OR MANUFACTURING FAULTS
PROCEDE DE DETECTION DES ERREURS DE MONTAGE ET/OU DE FABRICATION D'UN MOTEUR THERMIQUE

(30) Priorität: 14.07.1999 DE 19932866
(43) Veröffentlichungstag der Anmeldung: 11.07.2001
(73) Patentinhaber: ABB PATENT GmbH, 68526 Ladenburg (DE)
(72) Erfinder: KOSMEHL, Torsten, D-42549 Velbert (DE); KEMNADE, Hans-Jürgen, D-46286 Dorsten (DE)
(74) Vertreter: Miller, Toivo
(86) Internationale Anmeldenummer: PCT/EP2000/006055
(87) Internationale Veröffentlichungsnummer: WO 2001/006224

(56) Entgegenhaltungen:
- DE-A- 2 905 197
- US-A- 5 515 712
- PATENT ABSTRACTS OF JAPAN vol. 1995, no. 09, 31. Oktober 1995 (1995-10-31) & JP 07 146216 A (MITSUBISHI MOTORS CORP), 6. Juni 1995 (1995-06-06)
- PATENT ABSTRACTS OF JAPAN vol. 1998, no. 11, 30. September 1998 (1998-09-30) & JP 10 153528 A (TOYOTA MOTOR CORP), 9. Juni 1998 (1998-06-09)

## Beschreibung

Die Erfindung betrifft ein Verfahren zum Prüfen eines Verbrennungsmotors nach dem Oberbegriff des Anspruchs 1.

Ein derartiges Verfahren ist aus der DE 196 54 137 A1, der EP 0.456 244 B1 und der EP 0 536 561 A1 bekannt. Dort erfolgt die Prüfung durch Messung des Drehmomentes des schleppenden Elektromotors, wobei bestimmte Drehmomentwerte ein Indiz für fehierhafte Motoren sind.

Ferner ist aus der US 4 448 063 ein Verfahren zum Testen eines Verbrennungsmotors bekannt, bei dem als Prüfmedium Öl unter Druck eingebracht wird.

Die Ermittlung der Drehmomentwerte ist ein aufwendiges Verfahren und kann zu unpräzisen Messergebnissen führen.

Aus der JP 07146216 A ist ein Verfahren und eine Vorrichtung bekannt geworden, bei welchen Luft aus einem Luftspeicher über eine Speiseleitung an der Unterseite eines Zylinderblocks diesem zugeführt wird. Von dort strömt die Luft im Zylinderblock über einen Ölkanal der von einem Schleppantrieb zu deren Rotation beaufschlagten Kurbelwelle zu, um so durch Messung der Durchflussmenge an Luft in der Speiseleitung und Vergleich mit einer vorgegebenen Durchflussmenge eine fehlerhafte Montage des Lagermetalls festzustellen.

Ausgehend von diesem Stand der Technik ist es Aufgabe der Erfindung ein Verfahren der eingangs genannten Art anzugeben, das keine Drehmomentmesswerte benötigt.

Diese Aufgabe wird erfindungsgemäss durch die im Anspruch 1 angegebenen Merkmale gelöst.

Danach wird das während der Schleppbewegung in die Kurbelgehäuseentiüftung gelangende Luftvolumen gemessen, der Messwert mit Sollwerten eines fehlerfreien Verbrennungsmotors verglichen und aus Abweichungen werden Montage- und/oder Fertigungsfehler abgeleitet. Das die Kolbenringe und/oder die Ventilschaftdichtung passierende Luftvolumen wird auf seinem Weg, den es durch das Kurbelgehäuse über die Kurbelgehäuseentlüftung zurücklegt, durch eine geeignete Meßeinrichtung bestimmt.

Mit diesem vom Drehmoment des Elektromotors unabhängigen Weg, gelingt eine präzise Fehlererkennung.

Vorzugsweise wird während der Schleppbewegung zumindest zeitweise ein Auslaßkanal des Verbrennungsmotors verschlossen.

Durch diese Maßnahme erhöht sich während des Ausstoßtaktes der Druck im Brennraum des Verbrennungsmotores, was eine Erhöhung der in die Kurbelgehäuseentlüftung gelangenden Volumenströmung darstellt.

Zur Erzielung eines automatisierten Prüfablaufs werden charakteristische Fehler, wie zum Beispiel das Fehlen eines bestimmten Kolbenringes oder einer Ventilschaftdichtung simuliert, so daß unmittelbare Vergleichswerte bestehen.

Insbesondere zum Feststellen einer fehlenden Ventilschaftdichtung wird saug-oder druckseitig ein Stützdruck aufgebracht, wobei die erhöhte Volumenmenge durch Schließen des Schiebers in der Ansaug-oder Auslaßleitung aufrecht erhalten wird.

Anhand eins Ausführungsbeispieles und einer schematischen Zeichnung wird das erfindungsgemäße Verfahren beschrieben.

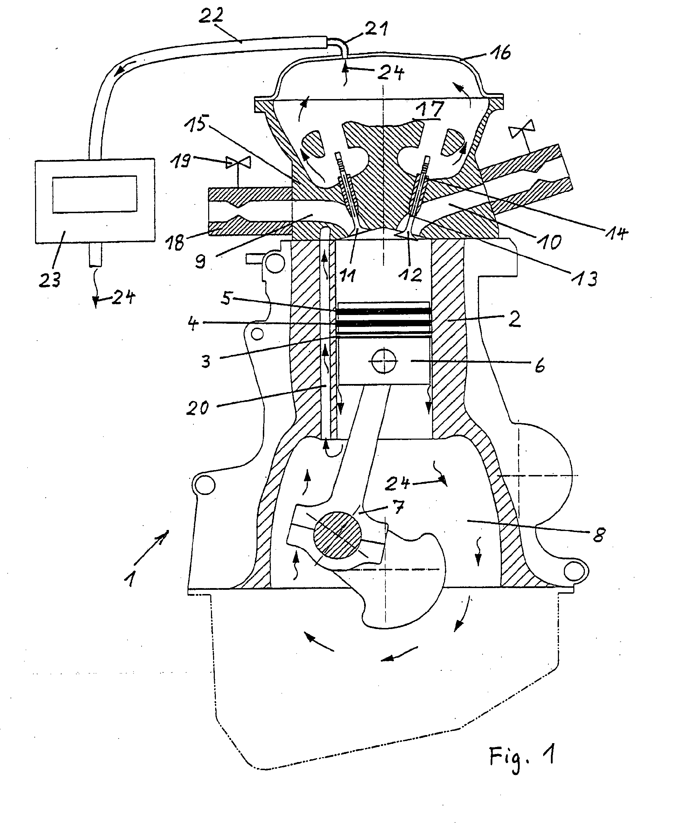

Die einzige Figur zeigt einen Teilschnitt durch einen schematisch dargestellten Verbrennungsmotor 1. In einem Zylinder 2 bewegt sich ein mittels drei Kolbenringen 3, 4, 5 abgedichteter Kolben 6 und treibt einen Kurbeltrieb 7, der in einem Kurbelgehäuse 8 angeordnet ist. Ein Einlaßkanal 9 und ein Auslaßkanal 10 sind mit Ventilen 11, 12 verschließbar. Der jeweilige Ventilschaft 13 durchsetzt unter Zwischenschaltung einer Ventilschaftdichtung 14 einen Ventilkörper 15, der zusammen mit einem Ventildeckel 16 einen Raum 17 begrenzt. Dem Ein- und Auslaßkanal 9, 10 sind Stutzen 18 zugeordnet, deren Strömungsquerschnitt über Schieber 19 variierbar beziehungsweise absperrbar ist.

Der nach erfolgter Montage zum Zwecke der Prüfung auf Montage- und/oder Fertigungsfehler von einem nicht dargestellten Elektromotor mit einer vorgebbaren Drehzahl geschleppte Verbrennungsmotor ist mit einer Kurbeigehäuseentlüftung ausgestattet, deren Kanal 20 in dem Raum 17 endet. An einem den Ventildeckel 16 durchsetzenden Rohrbogen 21 schließt ein Schlauch 22 eines Volumenmeßgerätes 23 an, das den durch die Pfeile 24 symbolisierten Volumenstrom dynamisch über der Zeit mißt.

Der im Volumenmeßgerät in Liter pro Minute gemessene Volumstrom wird mit den Volumenstromwerten eines fehlerfreien Verbrennungsmotores verglichen. Abweichungen von den Sollwerten weisen auf Fehler hin. Bestimmte Fehler, wie zum Beispiel das Fehlen eines Kolbenringes, werden simuliert und einem Meßwert zugeordnet. Taucht dieser Meßwert beim Prüfvorgang auf, so kann er sofort diesem Fehler zugeordnet werden. Aus Abweichungen werden somit Montage- und/oder Fertigungsfehler örtlich und sequentiell abgeleitet. Durch das Verschließen des Anschlußkanals 10 erhöht sich während des Ausstoßtaktes der Druck im Brennraum, was eine Steigerung des Luftvolumens (auch als Blowby-Gasmenge bezeichnet), das im Bereich der Kolbenringe in das Kurbelgehäuse strömt, bewirkt.

Auch das im Bereich der Ventilschaftführung in Richtung Raum 17 strömende Volumen läßt sich ermitteln. Vorzugsweise wird entweder saugseitig oder abgasseitig ein Stützdruck aufgebracht, wobei entweder in der Saug- oder in der Abgasleitung ein Schieber geschlossen ist.

## Patentansprüche

1. Verfahren zum Prüfen eines ein Kurbelgehäuse (8) umfassenden Verbrennungsmotors (1) auf Montage- und/oder Fertigungsfehler, wobei der Verbrennungsmotor (1) mit Hilfe eines Elektromotors schleppend angetrieben und auf eine vorgebbare Drehzahl gebracht wird und wobei der Schleppbewegung das in der die Kurbelgehäuseentlüftung gelangte Luftvolumen gemessen wird, sowie dieser Messwert mit den Sollwerten eines fehlerfreien Verbrennungsmotors (1) verglichen wird,
**dadurch gekennzeichnet, dass**
- *die auf der Saugseite zugeführte Luft aus der Entlüftung des Kurbelgehäuses (8) entnommen ist und dass*
- *das Kolbenringe (3, 4, 5) und Ventilschaftdichtungen (14) passierende Luftvolumen auf seinem Weg durch das Kurbelgehäuse (8) über die Kurbelgehäuseentlüffung (16) mittels einer Messeinrichtung (23) bestimmt wird* und dass
- aus Abweichungen der Messergebnisse daraus Montage- und/oder Fertigungsfehler abgeleitet werden.

2. Verfahren nach Anspruch 1, **dadurch gekennzeichnet, dass** während der Schleppbewegung zumindest zeitweise ein Auslasskanal (10) des Verbrennungsmotors (1) verschlossen wird.

3. Verfahren nach Anspruch 1 oder 2, **dadurch gekennzeichnet, dass** charakteristische Montagefehler simuliert werden und als Vergleichswerte zu den ermittelten Messwerten dienen.

4. Verfahren nach einem derAnsprüche 1 bis 3, **dadurch gekennzeichnet, dass** die Prüfung bei einer Drehzahl zwischen 15/min und 100/min durchgeführt wird.

5. Verfahren nach einem derAnsprüche 1 bis 4, **dadurch gekennzeichnet, dass** saug-oder abgasseitig ein Stützdruck aufgebracht wird.

## Claims

1. Method for testing an internal combustion engine (1) comprising a crankcase (8) for assembly and/or manufacturing faults, the internal combustion engine (1) being driven under traction with the aid of an electric motor and being brought to a predeterminable rotational speed, and the air volume that has entered the crankcase ventilation during the traction movement being measured, and this measurement value being compared with the desired values of a fault-free internal combustion engine
**characterized in that**
- the air supplied on the suction side is extracted from the ventilation system of the crankcase (8), and **in that**
- the air volume passing piston rings (3, 4, 5) and valve-stem gaskets (14) is determined, along the path which it follows through the crankcase (8) via the crankcase ventilation system (16), by means of a measuring device (23), and **in that**
- assembly and/or manufacturing faults are inferred from deviations of the measurement results.

2. Method according to Claim 1, **characterized in that**, during the traction movement, an outlet duct (10) of the internal combustion engine (1) is at least temporarily closed.

3. Method according to Claim 1 or 2, **characterized in that** characteristic assembly faults are simulated and serve as reference values for the measurement values determined.

4. Method according to one of Claims 1 to 3, **characterized in that** the test is carried out at a rotational speed of between 15/min and 100/min.

5. Method according to one of Claims 1 to 4, **characterized in that** a supporting pressure is applied on the suction side or on the exhaust-gas side.

## Revendications

1. Procédé de détection des erreurs de montage et/ou de fabrication d'un moteur à combustion (1) comprenant un carter de vilebrequin (8), le moteur à combustion (1) étant entraîné en régime de frein moteur à l'aide d'un moteur électrique et étant amené à une vitesse de rotation prédéfinissable et le volume d'air étant parvenu pendant le mouvement d'entraînement dans le recyclage des gaz du carter de vilebrequin étant mesuré, et cette valeur de mesure étant comparée aux valeurs de consigne d'un moteur à combustion (1) sans erreur,
**caractérisé en ce que**
- l'air acheminé du côté aspiration est prélevé du recyclage des gaz du carter de vilebrequin (8) et **en ce que**
- le volume d'air passant par les segments de piston (3, 4, 5) et les joints d'étanchéité de la tige de soupape (14) est déterminé sur son chemin à travers le carter de vilebrequin (8) par le biais du recyclage des gaz du carter de vilebrequin (16) au moyen d'un dispositif de mesure (23) et **en ce**
- **qu'**à partir des écarts des résultats de la mesure, on en déduit des erreurs de montage et/ou de fabrication.

2. Procédé selon la revendication 1, **caractérisé en ce que** pendant le mouvement d'entraînement, un canal d'échappement (10) du moteur à combustion (1) est au moins temporairement fermé.

3. Procédé selon la revendication 1 ou 2, **caractérisé en ce que** des erreurs de montage caractéristiques sont simulées et servent de valeurs de comparaison avec les valeurs de mesure déterminées.

4. Procédé selon l'une quelconque des revendications 1 à 3, **caractérisé en ce que** la détection est effectuée à une vitesse de rotation comprise entre 15/min et 100/min.

5. Procédé selon l'une quelconque des revendications 1 à 4, **caractérisé en ce qu'**une pression de soutien est appliquée du côté de l'aspiration ou du côté des gaz d'échappement.
